# EUROPEAN PATENT APPLICATION

(11) **EP 4 683 025 A1**
(43) Date of publication of application: **21.01.2026**
(21) Application number: 25190487.6
(22) Date of filing: 18.07.2025
(51) Int. Cl.: H01M 10/04, H01M 10/44, H01M 10/52, H01M 50/609, H01M 50/70, H01M 10/052

(54) **METHOD AND APPARATUS FOR MANUFACTURING SECONDARY BATTERY**

(30) Priority: 19.07.2024 KR 20240095915
(71) Applicant: SAMSUNG SDI CO., LTD., Yongin-si, Gyeonggi-do 17084 (KR)
(72) Inventor: KO, Eunjoo, 17084 Yongin-si (KR); KIM, Duckhyun, 17084 Yongin-si (KR); KIM, Jinmun, 17084 Yongin-si (KR); KANG, Suhyeon, 17084 Yongin-si (KR); LEE, Byeonggwan, 17084 Yongin-si (KR); LEE, Chanhyung, 17084 Yongin-si (KR); CHOI, Huiju, 17084 Yongin-si (KR)
(74) Representative: Maiwald GmbH

(57) **Abstract**

A method of manufacturing a secondary battery is provided wherein efficiency of a secondary battery manufacturing process is improved and the secondary battery is more structurally stable. The method of manufacturing a secondary battery includes providing a secondary battery, injecting an electrolyte into the secondary battery, activating the secondary battery into which the electrolyte is injected, and applying ultrasonic waves to the electrolyte in the secondary battery.

## Description

### BACKGROUND

### 1. Field

Embodiments relate to a method and apparatus for manufacturing a secondary battery. More specifically, embodiments relate to a method and apparatus for manufacturing a secondary battery, with the efficiency of the secondary battery manufacturing process being improved and with the performance and structural stability of a secondary battery being improved.

### 2. Description of the Related Art

With the rapid development of the electrical, electronic, communications and computer industries, the demand for high-performance and high-safety secondary batteries has rapidly increased. In particular, with the trend toward lighter, thinner, smaller, and more portable electrical and electronic products, secondary batteries, which are key components, are also required to be lighter and smaller.

Due to the depletion of oil and environmental pollution problems such as air pollution and noise because of the mass proliferation of vehicles, there is a need for new types of energy sources. Thus, there is an increasing need to develop electric vehicles, and there is a need to develop batteries with high power and high energy density as a power source for the electric vehicles.

In response to such needs, high-performance, next-generation, and high-tech new batteries that have been receiving the most attention recently are secondary batteries where lithium used as an anode has very low density and standard reduction potential and, thus, may be an electrode material for high energy density batteries.

In the process of manufacturing such a secondary battery, charging and activating the secondary battery may be performed. But when the secondary battery is charged at a high speed to shorten the activation time of the secondary battery, the performance and/or structural stability of the secondary battery may be reduced.

The above information disclosed in this section of BACKGROUND ART is only for enhancement of understanding of the background of the present disclosure and therefore it may contain information that is not a part of related art.

### SUMMARY

Embodiments are directed to providing a method and apparatus for manufacturing a secondary battery, which improves the efficiency of a secondary battery manufacturing process and the secondary battery is more structurally stable.

The objects to be solved by the present disclosure are not limited to the objects described herein, and other objects and advantages of the present disclosure may be understood from the description.

Additional aspects will be set forth in part in the description which follows and, in part, will be apparent from the description, or may be learned by practice of the presented embodiments of the disclosure.

According to an embodiment of the present disclosure for solving the above technical abject, a method of manufacturing a secondary battery includes providing a secondary battery, injecting an electrolyte into the secondary battery, activating the secondary battery into which the electrolyte is injected, and applying ultrasonic waves to the electrolyte in the secondary battery.

In the present embodiment, the activating of the secondary battery and the applying of the ultrasonic waves to the electrolyte may be performed simultaneously.

In the present embodiment, the applying of the ultrasonic waves to the electrolyte may be performed while a state of charge of the secondary battery increases.

In the present embodiment, the activating of the secondary battery may include initially charging the secondary battery, and aging the secondary battery that is initially charged, and the applying of the ultrasonic waves to the electrolyte may be performed while the initial charging of the secondary battery is performed.

In the present embodiment, in the applying of the ultrasonic waves to the electrolyte, a frequency of the ultrasonic waves may be variable.

In the present embodiment, the frequency of the ultrasonic waves applied to the electrolyte may be adjusted according to a state of charge of the secondary battery.

In the present embodiment, when the state of charge of the secondary battery is less than a preset value, the frequency of the ultrasonic waves applied to the electrolyte may be adjusted to be higher than the frequency of the ultrasonic waves applied to the electrolyte when the state of charge of the secondary battery is greater than the preset value.

In the present embodiment, the frequency of the ultrasonic waves applied to the electrolyte may be adjusted according to an activation time of the secondary battery.

In the present embodiment, when the activation time of the secondary battery is shorter than a preset time, the frequency of the ultrasonic waves applied to the electrolyte may be adjusted to be higher than the frequency of the ultrasonic waves applied to the electrolyte when the activation time of the secondary battery is longer than the preset time.

In the present embodiment, the applying of the ultrasonic waves may include applying ultrasonic waves having a first frequency to the electrolyte for a first time, and applying ultrasonic waves having a second frequency lower than the first frequency to the electrolyte for a second time that is shorter than the first time.

In the present embodiment, the applying of the ultrasonic waves having the first frequency and the applying of the ultrasonic waves having the second frequency may be performed repeatedly.

In the present embodiment, a ratio of the first time to the second time may be 3 to 5.

In the present embodiment, in the applying of the ultrasonic waves to the electrolyte, a frequency of the ultrasonic waves applied to the electrolyte may be 20 kHz to 20 MHz.

According to an embodiment of the present disclosure for solving the above technical object, an apparatus for manufacturing a secondary battery includes a charging unit electrically connected to a secondary battery and configured to charge the secondary battery, wherein an electrolyte is provided in the secondary battery, an ultrasonic generator configured to apply ultrasonic waves to one side of the secondary battery, and a controller configured to control driving of the ultrasonic generator while the secondary battery is charged.

In the present embodiment, the controller may be configured to control the driving of the ultrasonic generator to adjust a frequency of the ultrasonic waves applied to the secondary battery.

Preferably, the controller may measure a state of charge of the secondary battery and may adjust the frequency of the ultrasonic waves applied to the secondary battery according to the state of charge of the secondary battery.

Preferably, when the state of charge of the secondary battery is less than a preset value, the controller may adjust the frequency of the ultrasonic waves applied to the secondary battery to be higher than the frequency of the ultrasonic waves applied to the secondary battery when the state of charge of the secondary battery is greater than the preset value.

Preferably, the controller may adjust the frequency of the ultrasonic waves applied to the secondary battery according to a charging time of the secondary battery.

Preferably, when the charging time of the secondary battery is shorter than a preset time, the controller may adjust the frequency of the ultrasonic waves applied to the secondary battery to be higher than the frequency of the ultrasonic waves applied to the secondary battery when the charging time of the secondary battery is longer than the preset time.

Preferably, a frequency of the ultrasonic waves applied to the secondary battery by the ultrasonic generator may be 20 kHz to 20 MHz.

### BRIEF DESCRIPTION OF THE DRAWINGS

The above and other aspects, features, and advantages of certain embodiments will be more apparent from the following description taken in conjunction with the accompanying drawings.

The accompanying drawings illustrate exemplary embodiments of the present disclosure and, together with the following detailed description, serve to provide further understanding of the technical spirit of the present disclosure. However, the present disclosure is limited to the details shown in the drawings, in which:
FIG. 1 is a schematic view of an apparatus for manufacturing a secondary battery according to an embodiment of the present disclosure;
FIG. 2 is a graph for describing a method by which a controller controls a frequency of ultrasonic waves applied from an ultrasonic generator according to a state of charge of a secondary battery depicted in FIG. 1;
FIG. 3 is a graph for describing a method by which the controller controls a frequency of ultrasonic waves applied from the ultrasonic generator according to a state of charge of the secondary battery depicted in FIG. 1;
FIG. 4 is a graph for describing that the controller that controls a cycle for which the ultrasonic generator applies ultrasonic waves according to a control signal;
FIG. 5 is a flowchart for describing a method of manufacturing a secondary battery according to an embodiment of the present disclosure; and
FIG. 6 is a flowchart for describing a flow of an operation of activating a secondary battery and an operation of applying ultrasonic waves to an electrolyte.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the FIGS., to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, exemplary embodiments of the present disclosure will be described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best description. Accordingly, embodiments disclosed in the present specification and configurations illustrated in the drawings are merely most exemplary embodiments of the present disclosure and do not represent all of the technical ideas of the present disclosure, and thus it should be understood that there may be various equivalents and modifications that can substitute these at the time of filing of the present application.

Further, "comprise and include" and/or "comprising and including" used in this specification should be interpreted as specifying the presence of described shapes, numbers, steps, operations, members, elements, and/or groups thereof and do not exclude the presence or addition of other shapes, numbers, operations, members, elements, and/or groups thereof.

For example, for a better understanding of the present disclosure, the accompanying drawings are not illustrated on an actual scale and sizes of some elements can be exaggerated. For example, the same reference numbers may be assigned to the same components in different embodiments.

Stating that two objects of comparison are "the same" means that the two objects of comparison are "substantially the same." Therefore, substantially the same may include a deviation that is considered low in the art, for example, a deviation of 5% or less. For example, uniformity of a parameter in a certain area may mean uniformity from an average perspective.

It will be understood that, although the terms first, second, and the like are used herein to describe various elements, these elements should not be limited by these terms. These terms are only used to distinguish one element from another element, and a first element may also be a second element unless particularly described otherwise.

Through the specification, each element may be singular or plural unless particularly described otherwise.

When it is said that an arbitrary element is disposed on "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

Also, when it is said that a certain element is "connected" or "coupled" to another element, this may mean that the elements are directly connected or coupled to each other, but it should be understood that another element may be "interposed" between the elements or the elements may be "connected" or "coupled" to each other via another element. Further, the term "electrically coupled" may mean not only "directly coupled" but also may include "coupled via other interposing element."

Throughout the specification, "A and/or B" refers to "A, B, or A and B" unless particularly described otherwise. That is, "and/or" includes all or any combination of a plurality of listed items. "C to D" refers to C or more and D or less unless particularly described otherwise.

The terms used in this specification are for describing embodiments of the present disclosure and are not intended to limit the present disclosure.

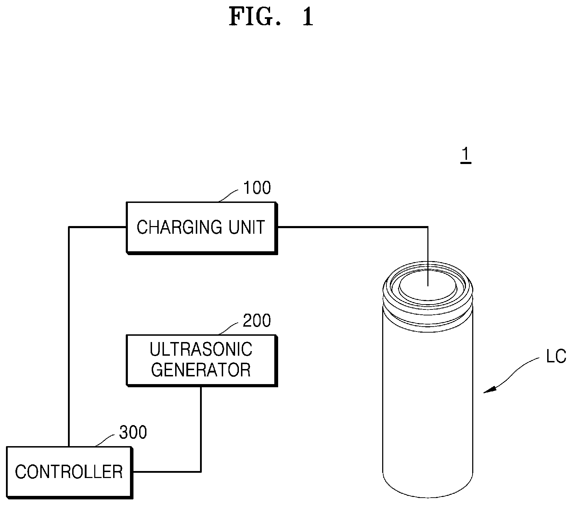

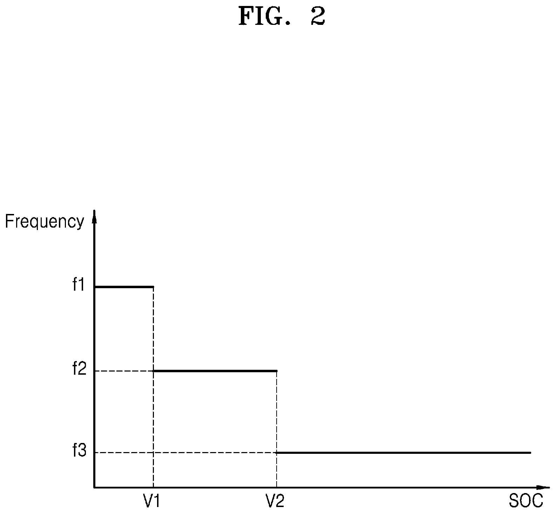

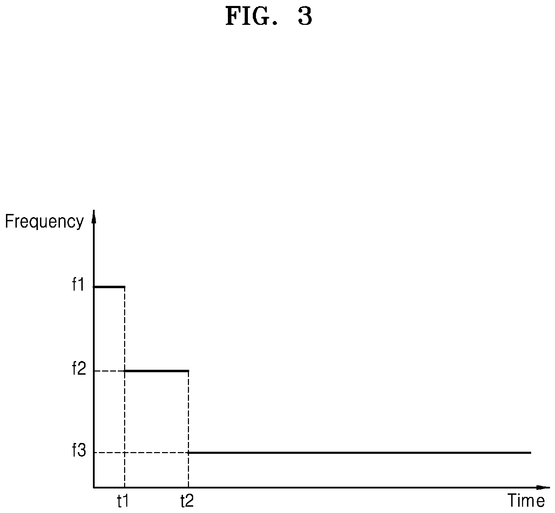

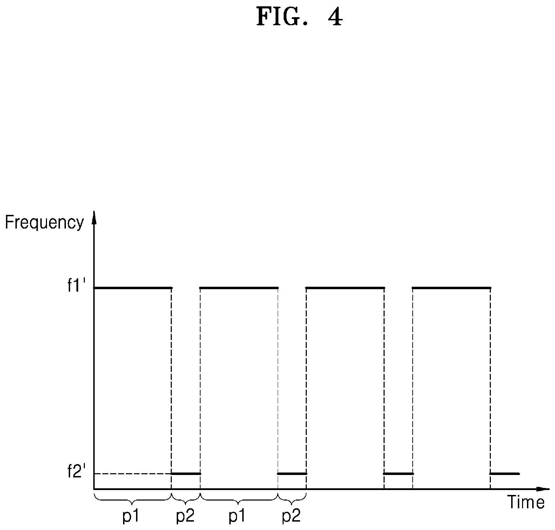

FIG. 1 is a schematic view illustrating an apparatus for manufacturing a secondary battery according to an embodiment of the present disclosure. FIG. 2 is a graph for describing a method by which a controller controls a frequency of ultrasonic waves applied from an ultrasonic generator according to a state of charge (SOC) of the secondary battery depicted in FIG. 1. FIG. 3 is a graph for describing a method by which the controller controls a frequency of ultrasonic waves applied from the ultrasonic generator according to an SOC of the secondary battery depicted in FIG. 1. FIG. 4 is a graph for describing a cycle for which the ultrasonic generator applies ultrasonic waves according to a control signal of the controller depicted in FIG. 1.

Referring to FIG. 1, an apparatus 1 for manufacturing a secondary battery LC according to an embodiment of the present disclosure may include a charging unit 100, an ultrasonic generator 200, and a controller 300. The apparatus 1 for manufacturing a secondary battery may perform a process of activating a secondary battery LC by applying a voltage to the secondary battery LC and may apply ultrasonic waves to one side of the secondary battery LC while a voltage is applied to the secondary battery LC.

Referring to FIG. 1, the charging unit 100 according to an embodiment of the present disclosure may be electrically connected to the secondary battery LC and may charge the secondary battery LC by applying a voltage to the secondary battery LC. The charging unit 100 may perform an activation process or formation process of the secondary battery LC through a method such as a constant current charging/discharging method, a pulse charging/discharging method, or a step providing method during charging/discharging. By such methods, a solid electrolyte interface (SEI) film may be formed inside the secondary battery LC.

The charging unit 100 may charge and discharge the secondary battery LC one to ten times for 10 minutes to 5 hours in a voltage range of 3.5 V to 4.0 V. By performing charging/discharging several times in such a voltage range, a SEI film may be formed having an average thickness in a specific range and also having high density. Also, a composition of components constituting the SEI film may be controlled. Thus, the components of the SEI film may be prevented from being separated from a surface of a cathode active material during high-speed charging/discharging. That is, the components of the SEI film may be prevented from being separated and the SEI film may be formed thicker, thereby providing for a secondary battery LC exhibiting excellent battery performance even during high-speed charging/discharging.

The charging unit 100 may be electrically connected to the controller 300, and the controller 300 may obtain information about an SOC of the secondary battery LC from the charging unit 100. However, embodiments of the present disclosure are not limited thereto, and the controller 300 may be directly electrically connected to the secondary battery LC to obtain the information about the SOC of the secondary battery LC.

Referring to FIG. 1, the ultrasonic generator 200 according to an embodiment of the present disclosure may generate ultrasonic vibrations and apply the ultrasonic waves to one side of the secondary battery LC. A frequency of the ultrasonic waves applied by the ultrasonic generator 200 may be in a range of 20 kHz to 20 MHz. The ultrasonic generator 200 may be electrically connected to the controller 300 so that a frequency of ultrasonic waves applied to the secondary battery LC and a cycle for applying ultrasonic waves may be changed according to a control signal of the controller 300.

A frequency of ultrasonic waves which is changed according to the control signal of the controller 300 will be described in detail in the description of a method of manufacturing a secondary battery, which will be to be described below.

In the present specification, the "secondary battery LC" is a collective term encompassing, for example, a cylindrical secondary battery, a pouch-type secondary battery, and a prismatic secondary battery.

Referring again to FIG. 1, when the secondary battery LC is a cylindrical secondary battery, the ultrasonic generator 200 may apply ultrasonic waves to a central portion of a side surface of the secondary battery LC. Although not shown in the drawings, when the secondary battery LC is a pouch-type secondary battery or a prismatic secondary battery, the ultrasonic generator 200 may apply ultrasonic waves to a central portion of a front surface of the secondary battery LC.

By applying ultrasonic waves to the secondary battery LC during an activation process or formation process of the secondary battery LC, an amount of gas included in an electrolyte may be reduced, the impregnation of the electrolyte may be promoted, the exchange current density of the electrode of the secondary battery LC may be improved, the overpotential of an anode may be reduced, and/or a side reaction phenomenon between a lithium metal and the electrolyte may be reduced.

The ultrasonic generator 200 according to an embodiment of the present disclosure may be moved in a preset direction by receiving power from the outside. For example, the controller 300 may be connected to the charging unit 100 to obtain information about a shape or type of the secondary battery LC on which an activation process, a formation process, or initial charging is performed. The controller 300 thereby may receive the obtained information about the shape or type of the secondary battery LC to adjust a relative position of the ultrasonic generator and the secondary battery LC. For example, the ultrasonic generator 200 may be moved to adjust a position at which ultrasonic waves are applied to the secondary battery LC. Thus, the position at which ultrasonic waves are applied may be appropriately adjusted according to the type and/or shape of the secondary battery LC.

Referring to FIG. 1, the controller 300 according to an embodiment of the present disclosure may control the driving of the ultrasonic generator 200 while the secondary battery LC is charged, and the controller 300 may be electrically connected to the ultrasonic generator 200. In particular, the controller 300 may control the driving of the ultrasonic generator 200 to adjust a frequency of ultrasonic waves applied to the secondary battery LC.

Referring to FIG. 2, the controller 300 may measure an SOC of the secondary battery LC and may adjust a frequency of ultrasonic waves applied to the secondary battery LC according to a size of the SOC of the secondary battery LC. For example, the controller 300 may adjust a frequency of ultrasonic waves, which are applied to the secondary battery LC when the SOC of the secondary battery LC is less than a preset value to be relatively higher than a frequency of ultrasonic waves applied to the secondary battery LC when the SOC of the secondary battery LC is greater than the preset value. During an activation process or a formation process, the secondary battery LC may be subjected to main charging or initial charging. Thus, the SOC thereof may be gradually increased.

Referring again to FIG. 2, when the SOC of the secondary battery LC is less than a preset first SOC V1, the controller 300 may control the driving of the ultrasonic generator 200 to adjust a frequency of ultrasonic waves applied to the secondary battery LC to a first frequency f1. When the SOC of the secondary battery LC is greater than the first SOC V1, the controller 300 may control the driving of the ultrasonic generator 200 to adjust the frequency of the ultrasonic waves applied to the secondary battery LC to a second frequency f2 that is lower than the first frequency f1.

In embodiments, the first SOC V1 may be in a range of 1 % to 10 % or 2 % to 5 %. Also in embodiments, the first frequency f1 may be in a range of 10 MHz to 20 MHz, and the second frequency f2 may be in a range of 50 kHz to 10 MHz.

Referring yet again to FIG. 2, when the SOC of the secondary battery LC is less than a second SOC V2 that is greater than the first SOC V1, the controller 300 may control the driving of the ultrasonic generator 200 to adjust a frequency of ultrasonic waves applied to the secondary battery LC to the second frequency f2. And when the SOC of the secondary battery LC is greater than the second SOC V2, the controller 300 may control the driving of the ultrasonic generator 200 to adjust the frequency of the ultrasonic waves applied to the secondary battery LC to a third frequency f3 that is lower than the second frequency f2.

In embodiments, the second SOC V2 may be in a range of 10 % to 20 %, and the third frequency f3 may be in a range of 20 kHz to 50 kHz.

Referring to FIG. 3, the controller 300 according to an embodiment of the present disclosure may adjust a frequency of ultrasonic waves applied to the secondary battery LC according to a charging time of the secondary battery LC. For example, the controller 300 may adjust a frequency of ultrasonic waves, which are applied to the secondary battery LC when a charging time of the secondary battery LC is shorter than a preset time to be higher than a frequency of ultrasonic waves applied to the secondary battery LC when the charging time of the secondary battery LC is longer than the preset time.

Referring to FIG. 3, when the charging time of the secondary battery LC is shorter than a present first charging time t1, the controller 300 may control the driving of the ultrasonic generator 200 to adjust a frequency of ultrasonic waves applied to the secondary battery LC to the first frequency f1. When the charging time of the secondary battery LC is longer than the first charging time t1, the controller 300 may control the driving of the ultrasonic generator 200 to adjust the frequency of the ultrasonic waves applied to the secondary battery LC to the second frequency f2 that is lower than the first frequency f1. In embodiments, the first frequency f1 may be in a range of 10 MHz to 20 MHz, and the second frequency f2 may be in a range of 50 kHz to 10 MHz.

Referring again to FIG.3, when the charging time of the secondary battery LC is between the first charging time t1 and the second charging time t2, the controller 300 may control the driving of the ultrasonic generator 200 to adjust a frequency of ultrasonic waves applied to the secondary battery LC to the second frequency f2. And when the charging time of the secondary battery LC is longer than the second charging time t2, the controller 300 may control the driving of the ultrasonic generator 200 to adjust the frequency of the ultrasonic waves applied to the secondary battery LC to the third frequency f3 that is lower than the second frequency f2. In embodiments, the third frequency f3 may be in a range of 20 kHz to 50 kHz.

Referring to FIG. 4, the controller 300 according to embodiments of the present disclosure may control the driving of the ultrasonic generator 200 to control a cycle for which the ultrasonic generator 200 applies ultrasonic waves to the secondary battery LC. For example, the controller 300 may control the driving of the ultrasonic generator 200 such that ultrasonic waves having a frequency f1' are applied to the secondary battery LC for a time p1 and may control the driving of the ultrasonic generator 200 such that ultrasonic waves having a frequency f2', which is lower than the frequency f1', are applied to the secondary battery LC for a second time p2 that is shorter than the first time p1.

Referring to FIGS. 2 and 4, when the SOC of the secondary battery LC is less than the first SOC V1, the controller 300 may perform control such that the first frequency f1 is adjusted to the frequency f1', and when the SOC of the secondary battery LC is greater than the first SOC V1 and less than the second SOC V2, the controller 300 may perform control such that the frequency f1' is adjusted to the second frequency f2. When the SOC of the secondary battery LC is greater than the second SOC V2, the controller 300 may perform control such that the frequency f1' is adjusted to the third frequency f3.

In embodiments, the 2' frequency f2' may be 0 Hz or about 0 Hz. And in embodiments, a ratio of the frequency f1' to the frequency f2' may be in a range of 10 to 100.

In embodiments, a ratio of the first time p1 to the second time p2 may be in a range of 3 to 5. For example, when the first time p1 is about 60 seconds, the second time p2 may be in a range of 12 seconds to 20 seconds, when the first time p1 is about 30 seconds, the second time p2 may be in a range of 6 seconds to 10 seconds, and when the first time p1 is about 5 seconds, the second time p2 may be in a range of 1 second to 2 seconds.

Thus, according to embodiments of the present disclosure, stress applied to an electrolyte due to continuous application of ultrasonic waves to the electrolyte may be minimized.

Hereinafter, a method of manufacturing a secondary battery according to an embodiment of the present disclosure will be described.

In the present disclosure, the method of manufacturing a secondary battery is described in time series for convenience of description. But the process and each operation which will be described below are not limited to the specific order set forth herein and may be performed simultaneously.

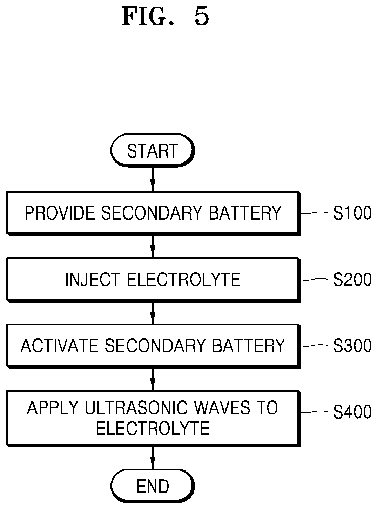

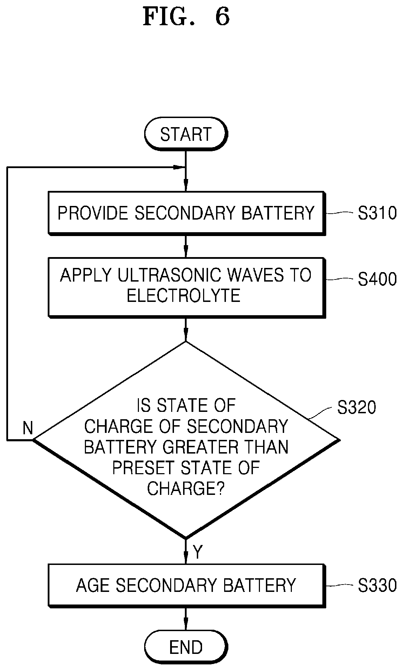

FIG. 5 is a flowchart of a method of manufacturing a secondary battery according to an embodiment of the present disclosure. FIG. 6 is a flowchart for describing a flow of operation S300 of activating a secondary battery and operation S400 of applying ultrasonic waves to an electrolyte in the method depicted in FIG. 5.

Referring to FIG. 5, the method of manufacturing a secondary battery according to an embodiment of the present disclosure may include an operation S100 of providing the secondary battery, an operation S200 of injecting the electrolyte into the secondary battery, an operation S300 of activating the secondary battery into which the electrolyte is injected, and an operation S400 of applying ultrasonic waves to the electrolyte injected into the secondary battery.

In operation S100 of providing the secondary battery, a user may provide a secondary battery LC including an electrode assembly and a case configured to accommodate the electrode assembly therein. When the secondary battery LC is a cylindrical secondary battery, the secondary battery LC may include an electrode assembly, a case configured to accommodate the electrode assembly therein, a cap assembly coupled to an opening of the case to seal the case, and an insulating plate positioned between the electrode assembly and the cap assembly inside the case.

The electrode assembly may include a separator, and a first electrode and a second electrode positioned with the separator interposed therebetween. The electrode assembly may be wound in a jelly-roll form.

The first electrode may include a first substrate and a first active material layer positioned on the first substrate. A first lead tab may extend outwardly from a first uncoated portion of the first substrate in which the first active material layer is not positioned. The first lead tab may be electrically connected to the cap assembly.

The second electrode may include a second substrate and a second active material layer positioned on the second substrate. A second lead tab may extend outwardly from a second uncoated portion of the second substrate in which the second active material layer is not positioned. The second lead tab may be electrically connected to the case. The first lead tab and the second lead tab may extend in opposite directions.

The first electrode may function as a cathode. The first substrate may be, for example, aluminum foil, and the first active material layer may include, for example, a transition metal oxide. The second electrode may function as an anode.

The second substrate may be, for example, copper foil or nickel foil, and the second active material layer may include, for example, graphite.

The separator may function to prevent a short circuit between the first electrode and the second electrode while allowing the movement of lithium ions between the first and second electrodes. The separator may be, for example, a polyethylene film, a polypropylene film, a polyethylene-polypropylene film, or the like.

The case may accommodate the electrode assembly and the electrolyte and may constitute an exterior of the secondary battery LC together with the cap assembly. The case may include a body having an approximately cylindrical shape and a bottom connected to one side of the body.

A beading portion that is deformed inward may be positioned at the body, and a crimping portion that is bent inward may be positioned at an end portion of an opening of the body. The beading portion may prevent the electrode assembly from moving inside the case and may facilitate the seating of a gasket and the cap assembly. The crimping portion may firmly fix the cap assembly by pressing an edge of the cap assembly through the gasket. The case may be made of, for example, nickel-plated iron.

The cap assembly may be fixed inside the crimping portion through the gasket to seal the case. The cap assembly may include an upper cap, a safety vent, a lower cap, an insulating member, and a subplate but embodiments of the disclosure are not limited to such examples and the cap assembly may be modified in various ways.

The upper cap may be positioned at an uppermost side of the cap assembly. The upper cap may include a terminal portion that protrudes to be convex upward and is connected to an external circuit. An exhaust port for discharging gas may be positioned around the terminal portion.

The safety vent may be positioned below the upper cap. The safety vent may include a protrusion that protrudes to be convex downward and be connected to the subplate. At least one notch may be positioned around the protrusion.

When gas is generated due to the overcharging, abnormal operation, or the like of the secondary battery LC, the protrusion may be deformed upward by pressure and separated from the subplate, while the safety vent may be cut along the notch. The cut safety vent may allow gas to be discharged to outside of the secondary battery and thereby prevent an explosion inside of the secondary battery.

The lower cap may be positioned below the safety vent. The lower cap may have a first opening for exposing the protrusion of the safety vent and a second opening for discharging gas. The insulating member may be positioned between the safety vent and the lower cap to insulate the safety vent from the lower cap.

The subplate may be positioned below the lower cap. The subplate may be fixed to a lower surface of the lower cap to block the first opening of the lower cap, and the protrusion of the safety vent may be fixed to the subplate.

The first lead tab withdrawn from the electrode assembly may be fixed to the subplate. Thus, the upper cap, the safety vent, the lower cap, and the subplate may be electrically connected to the first electrode of the electrode assembly.

The insulating plate may be positioned in contact with the electrode assembly below the beading portion, and the insulating plate may have a tab opening for withdrawing the first lead tab. The cap assembly, which is electrically connected to the first electrode by the first lead tab, may face the electrode assembly with the insulating plate therebetween, and the cap assembly may maintain a state of being insulated from the electrode assembly by the insulating plate.

Electrodes are usually made by preparing a slurry with an active material having a desired polarity, applying the slurry onto a current collector, and drying and rolling the current collector. For example, in an electrode of the secondary battery LC manufactured in this way, a protruding electrode tab is attached to an electrode current collector through a method such as welding.

When the secondary battery LC is a prismatic secondary battery or a pouch-type secondary battery, the secondary battery LC may include an electrode assembly, a first current collector, a first terminal, a second current collector, a second terminal, a case, and a cap assembly.

The electrode assembly may be formed by winding or stacking a stack of a first electrode plate, a separator, and a second electrode plate, wherein the stack is formed in a thin plate shape or a film shape. When the electrode assembly is a wound stack, a winding axis may be parallel to a longitudinal direction of the case. But the electrode assembly may be a stack type rather than a wound type, and the shape of the electrode assembly is not limited in the present disclosure. For example, the electrode assembly may be a Z-stack electrode assembly in which a cathode plate and an anode plate are inserted into both sides of a separator bent in a Z-stack.

One or more electrode assemblies may be stacked such that long side surfaces thereof are adjacent to each other and may be accommodated inside the case. The number of electrode assemblies is not limited in the present disclosure.

The first electrode plate of the electrode assembly may serve as an anode, and the second electrode plate may serve as a cathode. Of course, the reverse is also possible. The first electrode plate may be formed by applying a first electrode active material such as graphite or carbon onto a first electrode current collector plate formed of metal foil of copper, a copper alloy, nickel, a nickel alloy, or the like. The first electrode plate may include a first electrode tab (or a first uncoated portion) that is an area onto which the first electrode active material is not applied. The first electrode tab may serve as a path for current flow between the first electrode plate and the first current collector. In some examples, when the first electrode plate is manufactured, the first electrode tab may be formed by being cut to protrude to one side of the first electrode plate. The first electrode tab may protrude to one side further than the separator without separate cutting.

The second electrode plate may be formed by applying a second electrode active material such as a transition metal oxide onto a second electrode current collector plate formed of metal foil of aluminum or an aluminum alloy. The second electrode plate may include a second electrode tab (or a second uncoated portion) that is an area onto which the second electrode active material is not applied. The second electrode tab may serve as a path for current flow between the second electrode plate and the second current collector. In some examples, when the second electrode plate is manufactured, the second electrode tab may be formed by being cut to protrude to a side of the second electrode plate. The second electrode tab may protrude to the side further than the separator without separate cutting.

In some examples, the first electrode tab may be positioned on a side surface of a left end portion of the electrode assembly, and the second electrode tab may be positioned on a side surface of a right end portion of the electrode assembly. Alternatively, the first electrode tab and the second electrode tab may be positioned on one surface in the same direction. The first electrode tab of the first electrode plate and the second electrode tab of the second electrode plate may be respectively positioned at both end portions of the electrode assembly, as described above.

In some examples, the electrode assembly may be accommodated in the case along with an electrolyte. For example, in the electrode assembly, the first current collector, and the second current collector may be positioned to be welded and connected to the first electrode tab of the first electrode plate and the second electrode tab of the second electrode plate.

Referring again to FIG. 5, in operation S200 of injecting the electrolyte into the secondary battery, the user may inject the electrolyte into the case of the secondary battery LC, thereby allowing the electrolyte to be in contact with or impregnated in the electrode assembly.

The electrolyte of the secondary battery LC may include a non-aqueous organic solvent and a lithium salt. The non-aqueous organic solvent may serve as a medium through which ions involved in an electrochemical reaction of a battery may move. The non-aqueous organic solvent may be a carbonate-based solvent, an ester-based solvent, an ether-based solvent, a ketone-based solvent, an alcohol-based solvent, an aprotic solvent, or a combination thereof, which may be used alone or in combination of two or more thereof. For example, when the carbonate-based solvent is used, cyclic carbonate and chain carbonate may be mixed and used.

The electrolyte injected into the secondary battery LC may be an organic electrolyte, and the organic electrolyte may include a lithium salt. The organic electrolyte may include a high-dielectric constant solvent and a low-boiling point solvent. The high-dielectric solvent may be at least one of ethylene carbonate, propylene carbonate, butylene carbonate, and gamma butyrolactone. The low-boiling point solvent may be at least one of dimethyl carbonate, ethyl methyl carbonate, diethyl carbonate, dipropyl carbonate, dimethoxyethane, diethoxyethane, and a fatty acid ester derivative. The lithium salt may be at least one of LiPF₆, LiBF₄, LiClO₄, Li(CF₃SO₂)₂, LiCF₃SO₃, LiSbF₆, and LiAsF₆. A concentration of the lithium salt may be within a range of 0.1 M to 2.0 M. When the concentration of the lithium salt is within this range, the electrolyte has appropriate conductivity and viscosity so that the electrolyte may exhibit excellent electrolyte performance and lithium ions may move effectively.

Referring to FIG. 6, an operation S300 of activating the secondary battery may include operation S310 of initially charging the secondary battery, an operation S320 of determining whether an SOC of the secondary battery is greater than a preset SOC, and an operation S330 of aging the secondary battery that is initially charged.

The operation S300 of activating the secondary battery and an operation S400 of applying the ultrasonic waves to the electrolyte may be performed simultaneously. That is, for example, the operation S310 of initially charging the secondary battery and the operation S400 of applying the ultrasonic waves to the electrolyte may be performed simultaneously.

In the operation S310 of initially charging the secondary battery, the user may electrically connect the secondary battery LC to the charging unit 100 to apply a voltage to the secondary battery LC. For example, in the operation S310 of initially charging the secondary battery, the charging unit 100 may apply positive power to a cathode tab provided in the electrode assembly and apply negative power to an anode tab to charge the electrode assembly, thereby forming an SEI film on an electrode surface.

In some embodiments, the operation S310 of initially charging the secondary battery may be performed in a vacuum or low-pressure environment so that gas included in the electrolyte may be discharged to outside of the secondary battery LC while the secondary battery LC is initially charged.

In the operation S320 of determining whether the SOC of the secondary battery is greater than the preset SOC, the controller 300 may detect information about the SOC of the secondary battery LC. When the SOC of the secondary battery LC is greater than the preset SOC, the controller 300 may control the driving of the charging unit 100 to stop charging of the secondary battery LC. For example, when the SOC of the secondary battery LC is less than the preset SOC, the controller 300 may control the driving of the charging unit 100 or the ultrasonic generator 200 to continuously charge the secondary battery LC until the SOV of the secondary battery LC is greater than the preset SO and may continuously apply ultrasonic waves to the secondary battery LC.

In embodiments, the operation S330 of aging the secondary battery may be a process of, after initial charging, storing the secondary battery LC under preset temperature and/or humidity conditions for a certain period of time to stabilize internal chemical reactions or optimize the electrical characteristics of a cell. In some embodiments, the operation S330 of aging the secondary battery may be an operation in which a stacked electrode assembly into which an electrolyte is injected is left and stabilized. For example, the operation S330 of aging the secondary battery may be performed at room temperature for 22 hours to 26 hours. When an aging time of the secondary battery LC exceeds 26 hours, a manufacturing process may be delayed. When the aging time of the secondary battery LC is shorter than 22 hours, the electrolyte may not be uniformly impregnated, which may hinder the formation of a uniform SEI film in a subsequent precharging process.

In some cases, the aging may be performed on the secondary battery LC for the aging time at a high temperature. When the aging is performed on the secondary battery LC for the aging time at a high temperature, the SEI film may be more stabilized and uniformly formed with a uniform thickness.

In an embodiment, a process of aging the secondary battery LC at a high temperature may be performed at a temperature of about 30 °C to about 45 °C for about 12 hours to 24 hours. When the process is performed within these temperature and time ranges, an appropriate thickness of the SEI film may be maintained, thereby maintaining capacity at the beginning of charging to secure the capacity of a lithium battery.

Referring to FIGS. 5 and 6, in the operation S400 of applying the ultrasonic waves to the electrolyte injected into the secondary battery according to an embodiment of the present disclosure, the controller 300 may drive the ultrasonic generator 200 to apply ultrasonic waves to one side of the secondary battery LC. For example, when the secondary battery LC is the cylindrical secondary battery, the controller 300 may adjust the position, posture, or ultrasonic wave application direction of the ultrasonic generator 200 such that ultrasonic waves are applied to the central portion of the side surface of the secondary battery LC. As another example, when the secondary battery LC is the pouch-type secondary battery or the prismatic secondary battery, the controller 300 may adjust the position, posture, or ultrasonic wave application direction of the ultrasonic generator 200 such that ultrasonic waves are applied to the central portion of the front surface of the secondary battery LC.

In the operation S400 of applying the ultrasonic waves to the electrolyte, a frequency of the ultrasonic waves applied to the electrolyte may be variable. And, for example, the controller 300 may control the driving of the ultrasonic generator 200 to change a frequency of ultrasonic waves, which are applied from the ultrasonic generator 200 to the secondary battery LC, according to a preset standard.

Referring to FIG. 2, during an activation process or a formation process, the controller 300 may measure an SOC of the secondary battery LC, which is charged by receiving a voltage from the charging unit 100, in real time. The controller 300 may adjust a frequency of ultrasonic waves applied to the secondary battery LC according to a change in SOC of the secondary battery LC. For example, the controller 300 may control the driving of the ultrasonic generator 200 such that a frequency of ultrasonic waves that are applied to the secondary battery LC when the SOC of the secondary battery LC is less than a preset value to be relatively higher than a frequency of ultrasonic waves applied to the secondary battery LC when the SOC of the secondary battery LC is greater than the preset value.

Referring to FIG. 2, when the SOC of the secondary battery LC is less than the preset first SOC V1, the controller 300 may control the driving of the ultrasonic generator 200 to adjust a frequency of ultrasonic waves applied to the secondary battery LC to the first frequency f1. As the SOC of the secondary battery LC gradually increases to be greater than the first SOC V1, the controller 300 may control the driving of the ultrasonic generator 200 to adjust the frequency of the ultrasonic waves applied to the secondary battery LC to the second frequency f2 that is lower than the first frequency f1.

In example embodiments, the first SOC V1 may be in a range of 1 % to 0 % or 2 % to 5 %, the first frequency f1 may be in a range of 10 MHz to 20 MHz, and the second frequency f2 may be in a range of 50 kHz to 10 MHz.

Referring again to FIG. 2, when the SOC of the secondary battery LC is less than the second SOC V2 that is greater than the first SOC V1, the controller 300 may control the driving of the ultrasonic generator 200 to adjust a frequency of ultrasonic waves applied to the secondary battery LC to the second frequency f2. And when the SOC of the secondary battery LC gradually increases to be greater than the second SOC V2, the controller 300 may control the driving of the ultrasonic generator 200 to adjust the frequency of the ultrasonic waves applied to the secondary battery LC to the third frequency f3 that is lower than the second frequency f2.

In example embodiments, the second SOC V2 may be in a range of 10 % to 20 %, and the third frequency f3 may be in a range of 20 kHz to 50 kHz.

Referring to FIG. 3, the controller 300 according to an embodiment of the present disclosure may adjust a frequency of ultrasonic waves applied to the secondary battery LC as an activation time of the secondary battery LC increases. For example, the controller 300 may control the driving of the ultrasonic generator 200 such that a frequency of ultrasonic waves applied to the secondary battery LC when the activation time of the secondary battery LC is not yet a preset time is higher than a frequency of ultrasonic waves applied to the secondary battery LC when the activation time of the secondary battery LC is longer than the preset time.

As is apparent from the foregoing descriptions, in the present disclosure the "activation time" of the secondary battery LC may be the same as a "charging time" that the secondary battery LC is charged.

Referring again to FIG. 2, when the activation time of the secondary battery LC is shorter than the preset first charging time t1, the controller 300 may control the driving of the ultrasonic generator 200 to adjust a frequency of ultrasonic waves applied to the secondary battery LC to the first frequency f1. When the activation time of the secondary battery LC is longer than the first charging time t1, the controller 300 may control the driving of the ultrasonic generator 200 to adjust the frequency of the ultrasonic waves applied to the secondary battery LC to the second frequency f2 that is lower than the first frequency f1.

Accordingly, the controller 300 may easily adjust a frequency of ultrasonic waves applied to the secondary battery LC using only information about a charging time of the secondary battery LC, which increases together with an SOC of the secondary battery LC, without actually measuring information about the SOC of the secondary battery LC.

in example embodiments, the first frequency f1 may be in a range of 10 MHz to 20 MHz, and the second frequency f2 may be in a range of 50 kHz to 10 MHz.

Referring to FIG. 3, when the activation time of the secondary battery LC is shorter than the second charging time t2 that is longer than the first charging time t1, the controller 300 may control the driving of the ultrasonic generator 200 to adjust a frequency of ultrasonic waves applied to the secondary battery LC to the second frequency f2. When the activation time of the secondary battery LC is longer than the second charging time t2, the controller 300 may control the driving of the ultrasonic generator 200 to adjust the frequency of the ultrasonic waves applied to the secondary battery LC to the third frequency f3 that is lower than the second frequency f2. in example embodiments, the third frequency f3 may be in a range of 20 kHz to 50 kHz.

Referring to FIG. 4, the operation S400 of applying the ultrasonic waves according to embodiments of the present disclosure may include an operation of applying ultrasonic waves having the frequency f1' to the electrolyte for the first time p1, and an operation of applying ultrasonic waves having the frequency f2', which is lower than the 1' frequency f1', to the electrolyte for the second time p2, which is shorter than the first time p1.

The controller 300 may control the driving of the ultrasonic generator 200 such that ultrasonic waves having the frequency f1' are applied to the secondary battery LC for the first time p, and the controller 300 may control the driving of the ultrasonic generator 200 such that ultrasonic waves having the frequency f2', which is lower than the 1' frequency f1', are applied to the secondary battery LC for the second time p2 that is shorter than the first time p1.

In embodiments, when the SOC of the secondary battery LC is less than the first SOC V1, the controller 300 may perform control such that the first frequency f1 is adjusted to the frequency f1', and when the SOC of the secondary battery LC is greater than the first SOC V1 and less than the second SOC V2, the controller 300 may perform control such that the frequency f1' is adjusted to the second frequency f2. When the SOC of the secondary battery LC is greater than the second SOC V2, the controller 300 may perform control such that the frequency f1' is adjusted to the third frequency f3. In embodiments, the 2' frequency f2' may be 0 Hz or about 0 Hz. In some embodiments, a ratio of the frequency f1' to the frequency f2' may be in a range of 10 to 100. In embodiments, a ratio of the first time p1 to the second time p2 may be in a range of 3 to 5. For example, when the first time p1 is about 60 seconds, the second time p2 may be in a range of 12 seconds to 20 seconds, when the first time p1 is about 30 seconds, the second time p2 may be in a range of 6 seconds to 10 seconds, and when the first time p1 is about 5 seconds, the second time p2 may be in a range of 1 second to 2 seconds.

The operation S400 of applying the ultrasonic waves having the first frequency f1 or the operation S400 of applying the ultrasonic waves having the second frequency f2 may be performed repeatedly. Accordingly, the stress accumulated in the electrolyte or electrode assembly due to ultrasonic waves continuously being applied during an activation process of the secondary battery LC may be reduced. Also, an impregnation speed of the electrolyte may be increased and side reactions may be reduced. That is, in the method and apparatus for manufacturing a secondary battery according to embodiments of the present disclosure, while charging is performed on the secondary battery LC for an activation process, ultrasonic waves may be applied to one side of the secondary battery LC, thereby promoting the impregnation of the electrolyte into the electrode assembly and reducing the possibility of side reactions occurring between the electrode assembly and the electrolyte.

However, the effects that can be achieved through the present disclosure are not limited to the above-described effects, and other technical effects that are not described herein will be clearly understood by those skilled in the art.

Although the present disclosure has been described by way of embodiments, the present disclosure is not limited to the disclosed embodiments.

The embodiments described herein are descriptive and not limiting on the full scope of the disclosure. Descriptions of features or aspects within each embodiment should typically be considered as available for other similar features or aspects in other embodiments.

## Claims

1. A method of manufacturing a secondary battery (LC), the method comprising:
providing (S100) a secondary battery (LC);
injecting (S200) an electrolyte into the secondary battery (LC);
activating (S300) the secondary battery (LC) into which the electrolyte is injected; and
applying (S400) ultrasonic waves to the electrolyte in the secondary battery (LC).

2. The method of claim 1, wherein the activating of the secondary battery (LC) and the applying of the ultrasonic waves to the electrolyte are performed simultaneously.

3. The method of claim 2, wherein the applying of the ultrasonic waves to the electrolyte is performed while a state of charge of the secondary battery (LC) increases.

4. The method of claim 2 or 3, wherein the activating of the secondary battery (LC) comprises initially charging the secondary battery (LC) and aging the secondary battery (LC) that is initially charged, and
wherein the applying of the ultrasonic waves to the electrolyte is performed while the initial charging of the secondary battery (LC) is performed.

5. The method of any one of the preceding claims, wherein, in the applying of the ultrasonic waves to the electrolyte, a frequency of the ultrasonic waves is variable.

6. The method of claim 5, wherein the frequency of the ultrasonic waves applied to the electrolyte is adjusted according to a state of charge of the secondary battery (LC).

7. The method of claim 6, wherein, when the state of charge of the secondary battery is less than a preset value, the frequency of the ultrasonic waves applied to the electrolyte is adjusted to be higher than the frequency of the ultrasonic waves applied to the electrolyte when the state of charge of the secondary battery is greater than the preset value.

8. The method of claim 5, wherein the frequency of the ultrasonic waves applied to the electrolyte is adjusted according to an activation time of the secondary battery (LC).

9. The method of claim 8, wherein, when the activation time of the secondary battery is shorter than a preset time, the frequency of the ultrasonic waves applied to the electrolyte is adjusted to be higher than the frequency of the ultrasonic waves applied to the electrolyte when the activation time of the secondary battery is longer than the preset time.

10. The method of any one of the claims 2 to 9, wherein the applying of the ultrasonic waves to the electrolyte comprises:
applying ultrasonic waves having a first frequency to the electrolyte for a first time; and
applying ultrasonic waves having a second frequency lower than the first frequency to the electrolyte for a second time that is shorter than the first time.

11. The method of claim 10, wherein the applying of the ultrasonic waves having the first frequency and the applying of the ultrasonic waves having the second frequency are performed repeatedly.

12. The method of claim 11, wherein a ratio of the first time to the second time is 3 to 5.

13. The method of any one of the preceding claims, wherein, in the applying of the ultrasonic waves to the electrolyte, a frequency of the ultrasonic waves applied to the electrolyte is 20 kHz to 20 MHz.

14. An apparatus for manufacturing a secondary battery (LC), the apparatus comprising:
a charging unit (100) electrically connected to a secondary battery (LC) and configured to charge the secondary battery (LC), wherein an electrolyte is provided in the secondary battery (LC);
an ultrasonic generator (200) configured to apply ultrasonic waves to a side of the secondary battery (LC); and
a controller (300) configured to control driving of the ultrasonic generator (200) while the secondary battery (LC) is charged.

15. The apparatus of claim 14, wherein the controller (300) is configured to control the driving of the ultrasonic generator (200) to adjust a frequency of the ultrasonic waves applied to the secondary battery (LC).
